Europäisches Patentamt

European Patent Office

Office européen des brevets

(11) Veröffentlichungsnummer: **0 363 751**
**A2**

# (12) EUROPÄISCHE PATENTANMELDUNG

(21) Anmeldenummer: 89118044.0

(22) Anmeldetag: 29.09.89

(51) Int. Cl.5: **B60S 3/00 , B01D 21/00 , B01D 36/04**

(30) Priorität: 11.10.88 DE 3834537

(43) Veröffentlichungstag der Anmeldung:
18.04.90 Patentblatt 90/16

(84) Benannte Vertragsstaaten:
AT BE CH DE ES FR GB GR IT LI LU NL SE

(71) Anmelder: SUTTNER GMBH & CO. KG
Dunlopstrasse 21
D-4800 Bielefeld 21(DE)

(72) Erfinder: Suttner, Wolfgang
Dunlopstrasse 21
D-4800 Bielefeld 11(DE)

(74) Vertreter: von Rohr, Hans Wilhelm, Dipl.-Phys.
et al
Patentanwälte Gesthuysen & von Rohr
Huyssenallee 15 Postfach 10 13 33
D-4300 Essen 1(DE)

(54) **Vorrichtung zum Auffangen von bei der Wäsche eines Kraftfahrzeuges od. dgl. anfallendem verschmutztem Reinigungswasser.**

(57) Mit einer Vorrichtung zum Auffangen von bei der Wäsche eines Kraftfahrzeuges od. dgl. anfallendem verschmutztem Reinigungswasser mit einer Auffangwanne (1) und einem insbesondere als Ölabscheider wirkenden, ein Filtersystem aufwei senden Schmutzabscheider (2), bei der die Auffangwanne (1) einen Wannenboden (3), eine Wannenwandung (4) und mindestens eine Abflußöffnung (5) aufweist und das verschmutzte Reinigungswasser in der Auffangwanne (1) aufgefangen wird und durch die Abflußöffnung in den Schmutzabscheider (2) gelangt, wird das individuelle Waschen jeglicher mit umweltschädlichen Stoffen kontaminierter Fahrzeuge, Geräte und Teile zu Hause, beispielsweise in der Garageneinfahrt, ohne übermäßige Belastung des Abwassers mit Schadstoffen bequem und einfach durchführbar, indem die Auffangwanne (1) und vorzugsweise auch der Schmutzabscheider (2) transportabel ausgeführt ist bzw. sind und die Auffangwanne (1) zum Transport oder zur Aufbewahrung durch Klappen, Rollen, Falten od. dgl. verkleinerbar ist.

Fig. 1

EP 0 363 751 A2

## Vorrichtung zum Auffangen von bei der Wäsche eines Kraftfahrzeuges od. dgl. anfallendem verschmutztem Reinigungswasser

- Die Erfindung betrifft eine Vorrichtung zum Auffangen von bei der Wäsche eines Kraftfahrzeuges od. dgl. anfallendem verschmutztem Reinigungswasser nach dem Oberbegriff von Anspruch 1.

Bei der Autowäsche, beim Waschen von Motorrädern, Mofas, motorbetriebenen Rasenmähern und auch beim Waschen jeglicher mit umweltbelastenden Stoffen kontaminierter Geräte gelangen Schadstoffe zusammen mit dem Reinigungswasser in die Kanalisation, wodurch erhebliche Umweltprobleme entstehen. Beispielsweise können bei einer ganz normalen Autowäsche, die immer noch gerne vor der eigenen Haustür durchgeführt wird, ölhaltige Rückstände, Fette, Rückstände von Brems- und Kupplungsbelägen, Reinigungsmittel und Wachsmittel in das Abwasser gelangen. Besonders problematisch ist die Motorwäsche bei Kraftfahrzeugen, da dabei mit aggressiven Reinigern - sogenannten Kaltreinigern - mit Mineralöl getränkter Schmutz vom Motor abgewaschen wird und so ins Abwasser gelangt.

Zunehmendes Umweltbewußtsein und die Erkenntnis, daß bereits ein Liter Altöl ausreicht, um ca. 1.000.000 Liter Wasser zu verschmutzen, haben zumindest in der Bundesrepublik Deutschland dazu geführt, daß bei der kommerziellen Autowäsche, d. h. in Autowaschanlagen in Tankstellen oder in Kfz-Reparaturwerkstätten das durch die Autowäsche verschmutzte Reinigungswasser aufgefangen und durch einen Schmutz- und Ölabscheider geleitet werden muß.

Autowaschanlagen sind heutzutage also mit einer Vorrichtung zum Auffangen von bei der Wäsche eines Kraftfahrzeuges anfallendem verschmutztem Reinigungswasser ausgestattet. Diese Vorrichtungen sind fest in die jeweilige Waschhalle oder Waschstraße eingebaut und weisen jeweils eine durch Gitter od. dgl. abgedeckte, aus einem Wannenboden und einer Wannenwandung bestehende, in den Boden eingelassene Auffangwanne auf. Über ei ne oder mehrere Abflußöffnungen gelangt das durch die Auffangwanne aufgefangene verschmutzte Reinigungswasser in einen mit einem Filtersystem ausgestatteten, als Ölabscheider wirkenden Schmutzabscheider. Nach Durchströmen des Filtersystems gelangt das Reinigungswasser schließlich - von groben Schmutzpartikeln und Öl befreit - in die Kanalisation.

Die aus der Praxis bekannten Autowaschanlagen eignen sich aufgrund der dort eingebauten Auffangwannen mit Schmutzabscheidern nicht nur für die Autowäsche bzw. Motorwäsche, sondern auch für die Wäsche jeglicher mit umweltbelastenden Stoffen kontaminierter Fahrzeuge, Geräte und Teile.

Obwohl bereits einige Gemeinden das Autowaschen in der Garageneinfahrt oder am Straßenrand verboten haben, erfreut sich die eigenhändige Autowäsche nach wie vor großer Beliebtheit. In der Praxis werden im übrigen - sicherlich aus Gründen der Bequemlichkeit - Autowaschanlagen auch nicht dafür genutzt, beispielsweise einen ölverschmutzten Motorrasenmäher zu reinigen. Auch solche umweltbelastenden Reinigungsarbeiten werden zu Hause durchgeführt. Die eigenhändige Autowäsche, die Wäsche von Motorrädern, Mofas, die Reinigung von Rasenmähern, von ölverschmutzten Geräten od. dgl. bringt nicht nur ein hohes Maß an Verschmutzung des Abwassers mit sich, sondern führt zusätzlich zu einem hohen Wasserverbrauch.

Bekannt ist nun eine als Auffangwanne ausgeführte Vorrichtung (DE-A 1 911 939), die dazu dient, von einem Kraftfahrzeug herabtropfendes Schmutzwasser aufzufangen, so daß der Boden einer Garage od. dgl. nicht verschmutzt wird. Eine solche Auffangwanne könnte man auch zum Auffangen von bei der Wäsche eines Kraftfahrzeuges anfallendem Reinigungswasser verwenden, allerdings müßte man dann wegen des Fassungsvermögens der Auffangwanne mit dem Reinigungswasser relativ sparsam umgehen.

Die bekannte Auffangwanne besteht aus einem ggf. mehrlagigen Folienmaterial, nämlich aus einem säure- und laugenbeständigen, ggf. gewebeverstärktem Gummi- oder Kunststoffmaterial. Diese Auffangwanne ist mit Wannenboden und Wannenwandung einteilig ausgeführt, wobei die Wannenwandung als aufblasbarer Luftkanal ausgeführt ist. Im Mittelbereich ist dem Wannenboden ein weiterer aufblasbarer Luftschlauch unterlegt, durch den in aufgeblasenem Zustand dem Wannenboden ein nach außen, zur Wannenwandung hin gerichtetes Gefälle gegeben wird, so daß sich das abtropfende Wasser an der Wannenwandung sammelt und konzentriert. Das soll einer möglichst geringen Verdampfungsoberfläche dienen. Im übrigen wird hier erläutert, daß die Reinigung dieser Auffangwanne so erfolgt, daß sie im freien Zustand aus der Garage ins Freie gezogen, dort umgelegt und im Nachgang auf der Oberfläche durch Abfegen oder Abreiben behandelt wird.

Mit der zuvor erläuterten, bekannten Vorrichtung wird zwar verschmutztes Reinigungswasser aufgefangen, so daß eine Garage nicht verschmutzt wird, letztlich erfolgt aber eine vollkommene Belastung des Abwassers mit Schadstoffen dadurch, daß das gesammelte Reinigungswasser am Ende doch wieder in die Kanalisation abgelassen wird.

Die zuvor behandelte Vorrichtung könnte man nur dann weniger umweltbelastend einsetzen, wenn man in einer Garageneinfahrt ortsfest einen Gully mit eingebautem Schmutzabscheider anbrächte, in den dann das Reinigungswasser letztlich abfließt. Das würde bauliche Maßnahmen erfordern, die mit dem weiter oben erläuterten bisherigen "Waschverhalten" der privaten Haushalte nicht in Einklang steht.

Der Erfindung liegt nun die Aufgabe zugrunde, die bekannte Vorrichtung zum Auffangen von bei der Wäsche eines Kraftfahrzeuges od. dgl. anfallendem verschmutztem Reinigungswasser so auszugestalten und weiterzubilden, daß das individuelle Waschen jeglicher mit umweltschädlichen Stoffen kontaminierter Fahrzeuge, Geräte und Teile zu Hause, beispielsweise in einer Garageneinfahrt, ohne übermäßige Belastung des Abwassers mit Schadstoffen bequem und einfach durchführbar ist, und zwar ohne daß irgendwelche besonderen baulichen Maßnahmen getroffen werden müssen.

Die zuvor aufgezeigte Aufgabe ist bei einer Vorrichtung mit den Merkmalen des Oberbegriffs von Anspruch 1 durch die Merkmale des kennzeichnenden Teils von Anspruch 1 gelöst.

Erfindungsgemäß wird die Auffangwanne nicht letztlich zum abschließenden Auffangen des Reinigungswassers eingesetzt, sondern als Sammelwanne, durch die das vom Kraftfahrzeug od. dgl. abfließende verschmutzte Reinigungswasser gesammelt und einer erfindungsgemäß vorgesehenen Abflußöffnung zugeführt werden kann. Erfindungsgemäß ist an die Abflußöffnung ein Schmutzabscheider unmittelbar angeschlossen, der nicht baulich vorgesehen, sondern ebenso wie die Auffangwanne transportabel ist. Dadurch fließt das komplette verschmutzte Reinigungswasser zunächst einmal durch den Schmutzabscheider, der erfindungsgemäß insbesondere ja als Ölabscheider wirkt und ein Filtersystem aufweist. Das im Schmutzabscheider gefilterte Reinigungswasser kann dann entweder in die Kanalisation abfließen oder es kann auch zur Wiederverwendung ganz oder teilweise wieder angesaugt werden.

Wird die erfindungsgemäße Vorrichtung nicht mehr benötigt und stört sie aus irgendwelchen Gründen, so läßt sie sich wie die bekannte Auffangwanne zusammenklappen, zusammenrollen oder zusammenfalten, so daß sie in Form eines handlichen Paketes transportiert und aufbewahrt werden kann. Der erfindungsgemäß der Auffangwanne zugeordnete, ebenfalls transportable Schmutzabscheider läßt sich dabei von der Auffangwanne trennen und getrennt aufbewahren, er kann auch mit der Auffangwanne selbst fest verbunden, also beispielsweise in den Wannenboden integriert sein. Für die diesbezüglichen Ausgestaltungsmöglichkeiten gibt es verschiedene Lösungswege, auf die es aber für die grundsätzliche Lehre der Erfindung zunächst nicht ankommt.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen. In der Zeichnung zeigt

Fig. 1 in einer schematischen Darstellung den Einsatz einer erfindungsgemäßen Vorrichtung mit einer Auffangwanne und einem in der Auffangwanne stehenden Auto, wobei als Reinigungsgerät ein Hochdruckreiniger verwendet wird,

Fig. 2 ausschnittweise, vergrößert, einen Schnitt durch die Auffangwanne aus Fig. 1 entlang der Linie II-II,

Fig. 3 in einer Draufsicht, schematisch, zusammenhängende, zur Aufbewahrung gefaltete Wandelemente der Auffangwanne aus Fig. 1,

Fig. 4 in einer Draufsicht, ausschnittweise und vergrößert, eine Ausführungsform von Wandelementen, die jeweils einzeln von der Auffangwanne abnehmbar sind und

Fig. 5 in einer Darstellung wie in Fig. 2 ein weiteres Ausführungsbeispiel der erfindungsgemäßen Vorrichtung, wobei der Wannenboden und die Wannenwandung jeweils als aufblasbares Luftkissen ausgeführt sind.

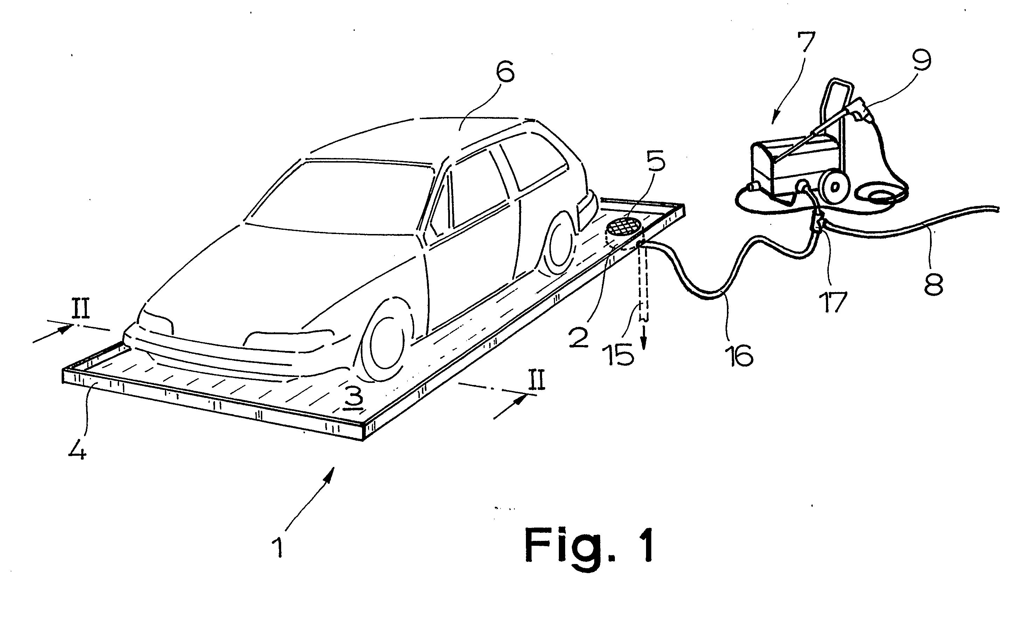

Fig. 1 zeigt in einer schematischen Darstellung eine Vorrichtung zum Auffangen von bei der Wäsche eines Kraftfahrzeuges anfallendem verschmutztem Reinigungswasser. Zu der Vorrichtung gehören eine Auffangwanne 1 und ein Schmutzabscheider 2. Die Auffangwanne 1 weist einen Wannenboden 3, eine Wannenwandung 4 und eine Abflußöffnung 5 auf. Im hier dargestellten Ausführungsbeispiel steht in der Auffangwanne 1 ein Auto 6, das mittels eines als Hochdruckreiniger ausgeführten Reinigungsgerätes 7 gewaschen werden soll. Zur Autowäsche wird dem über eine Frischwasserleitung 8 in das Reinigungsgerät 7 strömenden Wasser im Hochdruckreiniger 7 Reinigungsmittel beigemengt. Das Auto 6 läßt sich mittels einer Reinigungslanze 9 mit feinzerstäubtem Reinigungswasser unter hohem Druck abstrahlen. Das vom Auto 6 abtropfende verschmutzte Reinigungswasser wird in der Auffangwanne 1 aufgefangen und gelangt über die Abflußöffnung 5 in den Schmutzabscheider 2.

Da bei Kraftfahrzeugen jeglicher Art sowie bei mit Verbrennungsmotoren angetriebenen Geräten stets Ölrückstände zu beseitigen sind, muß der Schmutzabscheider 2 als Ölabscheider wirken. Darüber hinaus weist der Schmutzabscheider 2 ein Filtersystem auf, das je nach Verschmutzungsgrad der zu reinigenden Kraftfahrzeuge od. dgl. von Zeit zu Zeit ausgetauscht oder gereinigt werden muß.

Die Figuren 1 bis 5 zeigen nun im Zusammenhang, daß die Auffangwanne 1 und der Schmutzabscheider 2 transportabel ausgeführt sind und daß die Auffangwanne 1 zum Transport oder zur Aufbewahrung durch Klappen, Rollen, Falten od. dgl. verkleinerbar ist.

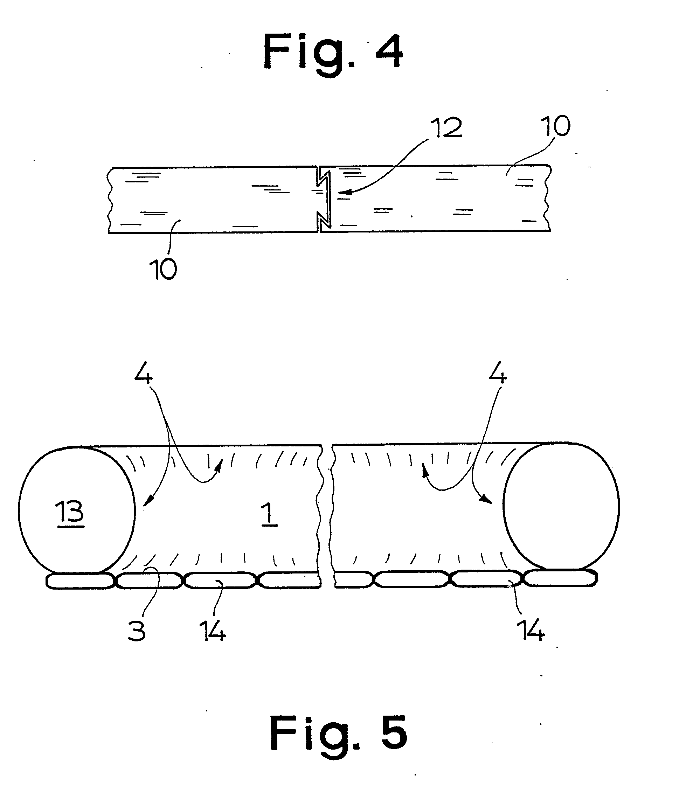

Der Wannenboden 3 kann aus steifen Platten bestehend steckbar bzw. klappbar oder aus einem elastischen bzw. biegbaren Material bestehend rollbar oder faltbar ausgeführt sein. Im in Fig. 1 dargestellten Ausführungsbeispiel gilt, daß die Auffangwanne 1 im Bereich des Wannenbodens 3 aus einem Kunststoff- Plattenmaterial besteht. Demgegenüber gilt bei Fig. 5, daß die Auffangwanne 1 insgesamt aus einem ggf. mehrlagigem Folienmaterial besteht, wobei es sich bei diesem Folienmaterial um ein säure- und laugenbeständiges, gewebeverstärktes Gummi- oder Kunststoffmaterial wie es z. B. bei Luftmatratzen, Schlauchbooten, Schwimmbadabdichtungen Verwendung findet.

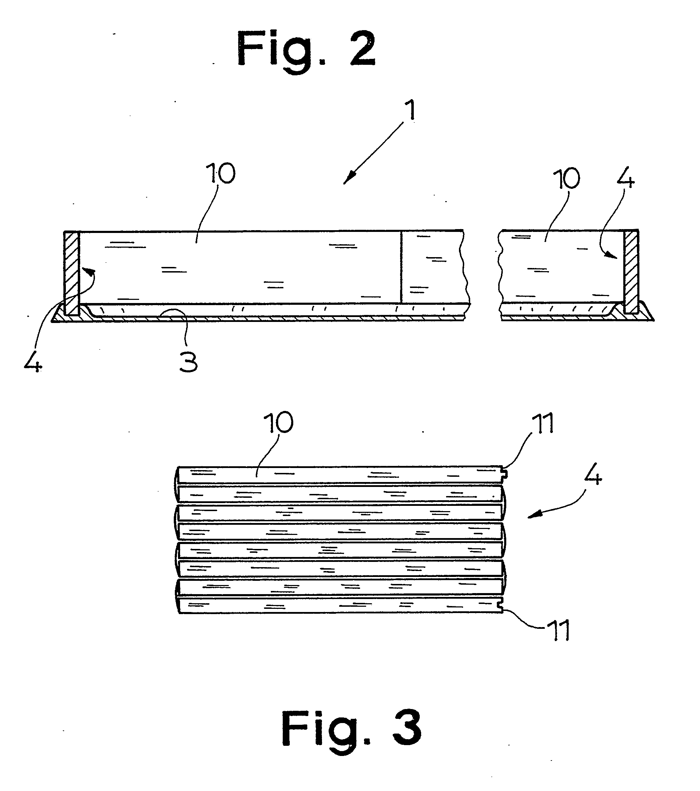

Hinsichtlich der Ausgestaltung der Wannenwandung 4 gibt es nun verschiedene Möglichkeiten, die für das hier bevorzugte Ausführungsbeispiel anhand der Fig. 2 bis 4 erläutert werden.

Zum leichteren Klappen, Rollen oder Falten der Vorrichtung empfiehlt es sich, daß die Wannenwandung 4 auf den Wannenboden 3 gemäß der Darstellung in Fig. 2 abdichtend aufsteckbar ist. Diese mindestens zweiteilige Ausführung der Auffangwanne 1 hat den Vorteil, daß der Wannenboden 3 und die Wannenwandung 4 voneinander trennbar sind und je nach Material in eine Richtung geklappt, gerollt oder gefaltet werden können.

Die Fig. 2 und 3 zeigen gemeinsam, daß die Wannenwandung 4 mehrere Wandelemente 10 aufweist. Dabei sind zwei Wandelemente 10 voneinander lösbar und die anderen Wandelemente 10 abdichtend fest miteinander verbunden und dabei faltbar. Fig. 3 zeigt in einer Draufsicht eine in Zick-Zack-Form gefaltete Wannenwandung 4, wobei die Wandelemente 10 jeweils ihrer Länge nach aneinanderliegen. Die abdichtende Gelenkverbindung zwischen den Wandelementen 10 könnte im Falle einer Herstellung der Wandelemente 10 aus Kunststoff als dünne, biegbare Kunststoffbrücke (Filmscharnier) ausgeführt sein. Die in Fig. 3 dargestellte, zusammengefaltete Wannenwandung 4 läßt sich dadurch schließen, daß die freien Enden 11 des ersten und des letzten Wandelementes 10 beispielsweise in Form einer Nut-/Feder-Verbindung abdichtend aneinander gesteckt werden.

Die Wannenwandung 4 kann auch aus beliebig vielen einzelnen, abdichtend aneinander steckbaren Wandelementen 10 bestehen. Eine solche mehrteilige Ausführung der Wannenwandung 4 hätte den Vorteil, daß zum Einfahren eines Kraftfahrzeuges in die Auffangwanne 1 bzw. zum Ausfahren des Kraftfahrzeuges aus der Auffangwanne 1 lediglich die Wandelemente 10 einer Seite der Wannenwandung 4 abgenommen werden müßten. Auch in diesem Falle könnten die Wandelemente 10 zur abdichtenden Verbindung miteinander eine Nut-/Feder-Verbindung oder - wie in Fig. 4 dargestellt - eine als Schwalbenschwanzführung 12 ausgebildete Verbindung aufweisen.

Die Wannenwandung könnte ebenso als eine in den Figuren nicht gezeigte, kreisringförmige, d. h. geschlossene Wannenwandung aus biegbarem Kunststoff ausgeführt sein. Zum Einsatz der erfindungsgemäßen Vorrichtung könnte man dieseWannenwandung wie bei den vorangegangenen Ausführungsbeispielen in eine im Wannenboden ausgebildete Nut abdichtend einstecken, zur Aufbewahrung ließe sich diese elastische Wannenwandung einfach zusammenrollen.

Besonders zweckmäßig ist es natürlich, wenn die Auffangwanne 1 einteilig ausgeführt ist. Im in Fig. 5 gezeigten Ausführungsbeispiel ist das dadurch erreicht, daß die Wannenwandung 4 als aufblasbarer Luftkanal 13 ausgeführt ist. Bei diesem Ausführungsbeispiel der erfindungsgemäßen Vorrichtung muß demnach die Auffangwanne 1 zum Transport oder zur Aufbewahrung nicht mehr in die Bestandteile Wannenboden 3 und Wannenwandung 4 zerlegt werden, sondern kann die gesamte Auffangwanne 1 nach Ablassen der Luft aus dem die Wannenwandung 4 bildenden Luftkanal 13 wie eine Luftmatratze einfach zusammengerollt bzw. zusammengefaltet werden.

Die Ausführung der Wannenwandung 4 als aufblasbarer Lufkanal 13 hat den weiteren Vorteil, daß beim Einfahren eines Kraftfahrzeugs in die Auffangwanne 1 bzw. beim Ausfahren des Kraftfahrzeuges aus der Auffangwanne 1 der Lufkanal 13 einfach überfahren werden kann. Die Elastizität des Gummi-oder Kunststoffmaterials der Auffangwanne 1 und die Kompressibilität der im Luftkanal 13 befindlichen Luft ermöglichen ein Überfahren der Wannenwandung 4 ohne Zerstörung der Wannenwandung 4. Selbstverständlich muß mit dem Ausfahren aus der Auffangwanne 1 solange gewartet werden, bis der größte Teil des von der Auffangwanne 1 aufgefangenen verschmutzten Reinigungswassers durch die Aubflußöffnung 5 abgelaufen ist.

Ähnlich wie bei Luftmatratzen oder Schlauchbooten könnte die Wannenwandung auch aus mehreren voneinander getrennten Luftkanälen gebildet sein. Eine solche Aufteilung der Wannenwandung in mehrere Luftkanäle hätte den Vorteil, daß bei einem defekten Luftkanal nicht die gesamt Wannenwandung in sich zusammenfällt.

Eine weitere Alternative zur Gestaltung der Auffangwanne der erfindungsgemäßen Vorrichtung in im wesentlichen einstückiger Form besteht darin, daß die Auffangwanne zur Bildung der Wannenwandung an den Rändern schlauchartig, an zumindest einer Stirnseite offene Aufnahmen aufweist und daß in diese Aufnahmen streifenartige bzw. plattenartige Versteifungselemente einschiebbar sind. Diese Konstruktion hat abdichtungstechnisch erhebliche Vorteile, da die Auffangwanne nach innen hin keine Verbindungs- und damit potentielle Leckstellen aufweist, sondern so von außen her versteift ist.

Bezüglich des Ablaufens des verschmutzten Reinigungswassers durch die Abflußöffnung 5 ist es besonders vorteilhaft, wenn der Wannenboden 3 unterschiedliche Dicke derart aufweist, daß bei ebener Unterlage zur Abflußöffnung 5 hin ein leichtes Gefälle besteht. Sollte ein solches Gefälle beispielsweise aufgrund einer unebenen Toreinfahrt als Unterlage nicht existieren, so muß nach der Wäsche das restliche, in der Auffangwanne 1 befindliche verschmutzte Reinigungswasser beispielsweise mit einem Schieber in die Abflußöffnung 5 geschoben werden. Im übrigen empfiehlt es sich ohnehin nach der Autowäsche, d. h. nach dem Herausfahren des Autos 6 aus der Auffangwanne 1, die Auffangwanne 1 mit unverschmutztem Reinigungswasser zu säubern.

Bezüglich eines einwandfreien Abflußes des verschmutzten Reinigungswassers durch die Abflußöffnung 5 ist es auch im Ausführungsbeispiel nach Fig. 5 vorteilhaft, wenn der Wannenboden 3 ein leichtes Gefälle zur Abflußöffnung hin aufweist. Dies wird bei der hier einteiligen Auffangwanne 1 in vorteilhafter Weise dadurch erreicht, daß der Wannenboden 3 als aufblasbares, dünnes Luftkissen 14 ausgeführt ist. Selbstverständlich wird beispielsweise ein zu reinigendes Kraftfahrzeug das Lufkissen 14 mit seinen Rädern zur Unterlage hin zusammendrücken, jedoch stellt sich beim Ausfahren aus der Auffangwanne 1 die Neigung zur Abflußöffnung 5 hin wieder ein und kommt auf jedenfalls bei der abschließenden Reinigung der Auffangwanne 1 voll zur Wirkung.

In einer einfachen Version des zuvor beschriebenen Ausführungsbeispiels der erfindungsgemäßen Vorrichtung könnte die Auffangwanne insgesamt aus einem einzigen aufblasbaren Wannenkörper bestehen. Nach Gebrauch der Vorrichtung könnte die Auffangwanne vom Schmutzabscheider gelöst und nach Ablassen der Luft zu einem handlichen Folienpaket zusammengelegt werden.

Die bisherigen Ausführungen zu der erfindungsgemäßen Vorrichtung haben sich ausschließlich mit der Ausgestaltung der Auffangwanne 1 beschäftigt. Jedoch spielt bei der erfindungsgemäßen mobilen Vorrichtung auch die Ausgestaltung und Anordnung des als Ölabscheider wirkenden Schmutzabscheiders 2 eine erhebliche Rolle. Bei dem in Fig. 1 dargestellten Ausführungsbeispiel ist der Schmutzabscheider 2 flach ausgebildet und kann so direkt unter der Abflußöffnung 5 angeordnet werde. Dabei ist darauf zu achten, daß die Auffangwanne 1 durch den Schmutzabscheider 2 im Bereich der Abflußöffnung 5 keine Erhöhung derart erfährt, daß das verschmutzte Reinigungswasser nicht mehr in die Abflußöffnung 5 hineinläuft. Besonders vorteilhaft wäre es bezüglich der Anordnung des Schmutzabscheiders 2 direkt unter der Abflußöffnung 5, wenn in der Unterlage, beispielsweise in der Garageneinfahrt, an entsprechender Stelle eine Vertiefung zur problemlosen Anordnung des Schmutzabscheiders 2 vorgesehen wäre. Ein großflächiger, flacher Schmutzabscheider könnte unter einer großflächigen Abflußöffnung liegen oder sich von der dann nicht mehr notwendig großflächigen Abflußöffnung weg unter dem Wannenboden erstrecken.

Der Schmutzabscheider könnte auch abseits der Auffangwanne angeordnet sein, indem er nämlich über eine vorzugsweise als Schlauch ausgeführte Abflußleitung mit der Abflußöffnung strömungsverbunden wäre. Auch eine Anordnung des Schmutzabscheiders über dem Niveau der Auffangwanne wäre möglich, wenn entweder der Schmutzabscheider selbst mit einer ansaugenden Pumpe ausgestattet wäre oder wenn das verschmutzte Reinigungswasser beispielsweise vom Hochdruckreiniger her durch den Schmutzabscheider hindurch angesaugt würde.

In der einfachsten Ausführung des Schmutzabscheiders 2 wird das im Schmutzabscheider 2 gefilterte Reinigungswasser beispielsweise über eine Abwasserleitung 15 bzw. über einen Wasserschlauch direkt in die Kanalisation geleitet. Grobe Schmutzpartikel sowie die Umwelt stark belastendes Mineralöl werden im Schmutzabscheider 2 abgefangen, so daß das Reinigungswasser relativ sauber ist und für die Umwelt nur noch eine geringe Belastung darstellt.

Unter dem Gesichtspunkt der Wassereinsparung bei der Autowäsche, insbesondere dann, wenn beispielsweise in einer größeren Familie mehrere Autos gewaschen werden sollen, ist es besonders vorteilhaft, wenn der Schmutzabscheider 2 mit dem Reinigungsgerät 7 strömungsverbunden ist. In dem in Fig. 1 dargestellten Ausführungsbeispiel weist der Schmutzabscheider 2 neben seiner Abwasserleitung 15 eine zum Reinigungsgerät 7 führende Verbindungsleitung 16 auf. Das im Schmutzabscheider 2 gefilterte Reinigungswasser wird zur Wiederverwendung, d. h. zur weiteren Autowäsche vom Reinigungsgerät 7 angesaugt und zirkuliert so zwischen der Auffangwanne 1 und dem Hochdruckreiniger 7. Die Wiederverwendung des gefilterten Reinigungswassers hat einerseits den Vorteil einer enormen Wassereinsparung, andererseits den Vorteil einer Wiederverwendung und somit einer erheblichen Reduzierung des Verbrauchs an Reinigungsmittel.

Im hier dargestellten und bevorzugten Ausführungsbeispiel gilt als eine besonders einfache konstruktive Lösung im übrigen, daß der Schmutzabscheider 2 über die Verbindungsleitung 16 mit der Frischwasserleitung 8 des Reinigungsgerätes 7 verbunden ist, daß dazu die Verbindungsleitung 16 an ein in der Frischwasserleitung 8 angeordnetes, als Injektor mit Rückschlagventil ausgeführtes Anschlußstück 17 angeschlossen ist und daß bei Strömungsunterbrechung in der Frischwasserleitung 8 das Rückschlagventil im Anschlußstück 17 die Verbindungsleitung 16 gegen das Einströmen von Frischwasser aus der Frischwasserleitung 8 schließt.

Abschließend ist hier zu erwähnen, daß die an sich mobile erfindungsgemäße Vorrichtung insbesondere dann, wenn die Auffangwanne insgesamt aus einem einteiligen Folienmaterial hergestellt ist, auch beispielsweise in einer Garageneinfahrt oder sogar in einer Garage fest eingebaut werden kann. Beispielsweise könnte die Formstabilität der Auffangwanne dadurch erreicht werden, daß die Wanne selbst mit Pflastersteinen aufgefüllt ist, die durch ihre Zwischenräume das verschmutzte Reinigungswasser hindurchsickern lassen. Die erfindungsgemäße Vorrichtung läßt sich also zur Wäsche von Kraftfahrzeugen oder sonstigen verschmutzten Geräten oder Teilen problemlos zu Hause fest einbauen, wodurch man den entsorgungstechnischen Vorteil einer kommerziellen Waschhalle erlangt. Beim festen Einbau der Auffangwanne sind sämtliche zuvor erörterten, den Schmutzabscheider und die Verwendung eines Reinigungsgerätes betreffenden Merkmale anwendbar.

**Ansprüche**

1. Vorrichtung zum Auffangen von bei der Wäsche eines Kraftfahrzeuges od. dgl. anfallendem verschmutztem Reinigungswasser mit einer Auffangswanne (1), wobei die Auffangwanne (1) einen Wannenboden (3) und eine Wannenwandung (4) aufweist und das verschmutzte Reinigungswasser in der Auffangwanne (1) aufgefangen wird, wobei die Auffangwanne (1) transportabel ausgeführt und zum Transport oder zur Aufbewahrung durch Klappen, Rollen, Falten od. dgl. verkleinerbar ist und wobei, vorzugsweise, die Auffangwanne (1) aus einem Folienmaterial besteht, **dadurch gekennzeichnet**, daß die Auffangwanne (1) mindestens eine Abflußöffnung (5) aufweist und an die Abflußöffnung (5) ein insbesondere als Ölabscheider wirkender, ein Filtersystem aufweisender, ebenso wie die Auffangwanne (1) transportabler Schmutzabscheider (2) angeschlossen ist, daß das in der Auffangwanne (1) aufgefangene, verschmutzte Reinigungswasser durch die Abflußöffnung (5) in den Schmutzabscheider (2) gelangt und daß das im Schmutzabscheider (2) gefilterte Reinigungswasser in die Kanalisation abfließt und/oder zur Wiederverwendung von einem Reinigungsgerät (7) angesaugt wird und so zwischen der Auffangwanne (1) und dem Reinigungsgerät (7) zirkuliert.

2. Vorrichtung nach Anspruch 1, dadurch gekennzeichnet, daß der Schmutzabscheider (2) flach ausgebildet und direkt unter der großflächigen Abflußöffnung (5) oder sich von der Abflußöffnung weg unter dem Wannenboden erstreckend angeordnet ist.

3. Vorrichtung nach Anspruch 1, dadurch gekennzeichnet, daß der Schmutzabscheider über eine vorzugsweise als Schlauch ausgeführte Abflußleitung mit der Abflußöffnung strömungsverbunden ist.

4. Vorrichtung nach einem der Ansprüche 1 bis 3, dadurch gekennzeichnet, daß die Reinigung mit einem vorzugsweise als Hochdruckreiniger ausgeführten Reinigungsgerät (7) erfolgt und das Reinigungsgerät (7), vorzugsweise, saugseitig an eine Frischwasserleitung (8) angeschlossen ist und daß der Schmutzabscheider (2) mit der Saugseite des Reinigungsgerätes (7) strömungsverbunden ist.

5. Vorrichtung nach Anspruch 4, dadurch gekennzeichnet, daß der Schmutzabscheider (2) über eine Verbindungsleitung (16) mit der Frischwasserleitung (8) des Reinigungsgerätes (7) verbunden ist, daß dazu die Verbindungsleitung (16) an ein in der Frischwasserleitung (8) angeordnetes, als Injektor mit Rückschlagventil ausgeführtes Anschlußstück (17) angeschlossen ist und daß bei Strömungsunterbrechung in der Frischwasserleitung (8) das Rückschlagventil im Anschlußstück (17) die Verbindungsleitung (16) gegen das Einströmen von Frischwasser aus der Frischwasserleitung (8) schließt.

6. Vorrichtung nach einem der Ansprüche 1 bis 5, dadurch gekennzeichnet, daß die Wannenwandung (4) auf den Wannenboden (3) abdichtend aufsteckbar ist, vorzugsweise daß die Wannenwandung (4) mehrere Wandelemente (10) aufweist und die Wandelemente (10) abdichtend miteinander verbunden und gegeneinander faltbar sind und, weiters vorzugsweise, daß mindestens zwei Wandelemente (10) voneinander lösbar sind.

7. Vorrichtung nach Anspruch 6, dadurch gekennzeichnet, daß die Wannenwandung (4) mehrere abdichtend miteinander steckbare, einzeln vom Wannendoden (3) abnehmbare Wandelemente (10) aufweist.

8. Vorrichtung nach einem der Ansprüche 1 bis 5, wobei die Auffangwanne (1) einteilig ausgeführt ist, dadurch gekennzeichnet, daß die Auffangwanne (1) zur Bildung der Wannenwandung (4) an den Rändern schlauchartige, an zumindest einer Stirnseite offene Aufnahmen aufweist und daß in diese Aufnahmen streifenartige bzw. plattenartige Versteifungselemente einschiebbar sind.

9. Vorrichtung nach Anspruch 8, dadurch gekennzeichnet, daß der Wannenboden (3) unterschiedliche Dicke derart aufweist, daß bei ebener Unterlage zur Abflußöffnung (5) hin ein leichtes Gefälle besteht.

10. Vorrichtung nach Anspruch 9, dadurch gekennzeichnet, daß der Wannenboden (3) als aufblasbares, dünnes Luftkissen (14) ausgeführt ist und im aufgeblasenen Zustand und bei ebener Unterlage ein leichtes Gefälle zur Abflußöffnung (5) hin bildet.

Fig. 1

# Fig. 2

# Fig. 3

# Fig. 4

# Fig. 5